# EUROPEAN PATENT APPLICATION

(11) **EP 4 123 984 A1**
(43) Date of publication of application: **25.01.2023**
(21) Application number: 21792350.7
(22) Date of filing: 15.04.2021
(51) Int. Cl.: H04L 29/06

(54) **ASSOCIATED SERVICE REGISTRATION METHOD, RELATED DEVICE AND COMPUTER-READABLE STORAGE MEDIUM**

(30) Priority: 22.04.2020 CN 202010323667
(71) Applicant: ZTE Corporation, Shenzhen, Guangdong 518057 (CN)
(72) Inventor: ZHANG, Lu, Shenzhen, Guangdong 518057 (CN); ZHOU, Xiaojun, Shenzhen, Guangdong 518057 (CN); HUANG, Xiaobing, Shenzhen, Guangdong 518057 (CN); YAN, Zhimin, Shenzhen, Guangdong 518057 (CN); TIAN, Huiqin, Shenzhen, Guangdong 518057 (CN)
(74) Representative: Canzler & Bergmeier Patentanwälte Partnerschaft mbB
(86) International application number: PCT/CN2021/087483
(87) International publication number: WO 2021/213243

(57) **Abstract**

An embodiment of the present disclosure relates to the technical field of communications and provides an associated service registration method, comprising: according to a locally-stored subordination relationship between terminals and target call session control function S-CSCF network elements, determining the target S-CSCF network element to which the terminal sending an associated service registration request belongs; and sending the associated service registration request to tire target S-CSCF network element. The associated service registration request is used to indicate the registration status of the terminal in the target S-CSCF network element which the target S-CSCF network element updates according to the associated service registration request. The embodiment of the present disclosure also provides a session border controller network element an S-CSCF network element and a computer-readable storage medium.

## Description

### TECHNICAL FIELD

Embodiments of the present disclosure relate to the field of communication technologies.

### BACKGROUND

The IP multimedia subsystem (IMS), as a subsystem supporting IP multimedia services proposed by the Third Generation Partnership Project (3GPP), is a development direction of multimedia communication, and can well satisfy interpersonal communication. A notable feature of the IMS is the use of a Session Initiation Protocol (SIP) system, in which communication is independent of the access method. The IMS has various capabilities, such as separation of control function and bearer capability of multimedia services, separation of call and session, separation of application and service, separation of service and network, and convergence of mobile network and Internet services.

An IMS network includes some basic network elements, including: Session Border Controller (SBC) / Proxy-Call Session Control Function (P-CSCF), Interrogating-Call Session Control Function (I-CSCF), Serving-Call Session Control Function (S-CSCF), and Home Subscriber Server (HSS).

### SUMMARY

According to one aspect of the embodiments of the present disclosure, there is provided an associated service registration method applicable to a session border controller network element, including: determining, according to a locally stored subordination relationship between terminals and target S-CSCF network elements, a target S-CSCF network element to which a terminal that sends an associated service registration request belongs; and sending the associated service registration request to the target S-CSCF network element. The associated service registration request is configured to instruct the target S-CSCF network element to update registration status of the terminal in the target S-CSCF network element according to the associated service registration request.

According to another aspect of the embodiments of the present disclosure, there is provided an associated service registration method applicable to an S-CSCF network element, including: receiving an associated service registration request sent from a session border controller network element; wherein the associated service registration request requests the session border controller network element to determine the S-CSCF network element according to a locally stored subordination relationship between a terminal that sends the associated service registration request and the S-CSCF network element, and send the associated service registration request to the S-CSCF network element; and updating, according to the associated service registration request, registration status of the terminal in the S-CSCF network element.

According to another aspect of the embodiments of the present disclosure, there is provided a session border controller network element, including: one or more processors; a storage device having one or more programs stored thereon which, when executed by the one or more processors, cause the one or more processors to perform the associated service registration method described above; and one or more I/O interfaces connected between the one or more processors and the storage device, and configured to enable information interaction between the one or more processors and the storage device.

According to another aspect of the embodiments of the present disclosure, there is provided an S-CSCF network element, including: one or more processors; a storage device having one or more programs stored thereon which, when executed by the one or more processors, cause the one or more processors to perform the associated service registration method described above; and one or more I/O interfaces connected between the one or more processors and the storage device, and configured to enable information interaction between the one or more processors and the storage device.

According to another aspect of the embodiments of the present disclosure, there is provided a computer-readable storage medium storing a computer program thereon which, when executed by a processor, causes any one of the associated service registration methods described above to be implemented.

### BRIEF DESCRIPTION OF DRAWINGS

FIG. 1 is a flowchart showing signaling interaction for associated service registration in an IMS according to the related art.
FIG. 2 is a flowchart of an associated service registration method according to an embodiment of the present disclosure.
FIG. 3 is another flowchart of an associated service registration method according to an embodiment of the present disclosure.
FIG. 4 is yet another flowchart of an associated service registration method according to an embodiment of the present disclosure.
FIG. 5 is still another flowchart of an associated service registration method according to an embodiment of the present disclosure.
FIG. 6 is still another flowchart of an associated service registration method according to an embodiment of the present disclosure.
FIG. 7 is still another flowchart of an associated service registration method according to an embodiment of the present disclosure.
FIG. 8 is a flowchart of an associated service registration method according to an embodiment of the present disclosure.
FIG. 9 is another flowchart of an associated service registration method according to an embodiment of the present disclosure.
FIG. 10 is yet another flowchart of an associated service registration method according to an embodiment of the present disclosure.
FIG. 11 is still another flowchart of an associated service registration method according to an embodiment of the present disclosure.
FIG. 12 is a block diagram of a session border controller network element according to an embodiment of the present disclosure.
FIG. 13 is another block diagram of a session border controller network element according to an embodiment of the present disclosure.
FIG. 14 is a block diagram of an S-CSCF network element according to an embodiment of the present disclosure.
FIG. 15 is another block diagram of an S-CSCF network element according to an embodiment of the present disclosure.
FIG. 16 is a block diagram of a computer-readable storage medium according to an embodiment of the present disclosure.
FIG. 17 is a schematic diagram showing signaling interaction for processing a registration refresh service initiated by a terminal according to an embodiment of the present disclosure.
FIG. 18 is a schematic diagram showing signaling interaction for processing a cancellation service initiated by a terminal according to an embodiment of the present disclosure.
FIG. 19 is a schematic diagram showing signaling interaction for registration information synchronization between network elements after HSS recovery according to an embodiment of the present disclosure.
FIG. 20 is another schematic diagram showing signaling interaction for registration information synchronization between network elements after HSS recovery according to an embodiment of the present disclosure.

### DETAIL DESCRIPTION OF EMBODIMENTS

In order to make those skilled in the art better understand the technical solutions of the present disclosure, the associated service registration method, the session border controller network element, the S-CSCF network element, and the computer-readable storage medium provided in the embodiments of the present disclosure will be described in detail below in conjunction with the accompanying drawings.

Example embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the related art and the present disclosure, and will not be interpreted in an idealized or overly formal sense unless expressly so defined herein.

In an IMS, the SBC/P-CSCF located at an edge of the IMS core network is a first connection point from a terminal to the network, and serves as a signaling proxy and a media proxy of the IMS core network, mainly functioning to isolate an access network and the IMS core network and thereby implementing functions including private and public network traversal, Network Address Translation (NAT) traversal, firewall traversal, Quality of Service (QoS) control, network security, and the like. The I-CSCF, as an external contact point of the IMS system, provides functions of hiding internal topology information of the IMS network, distributing S-CSCF, positioning called S-CSCF, and the like. The S-CSCF is responsible for registration authentication and authorization of users, control and triggering of user services, and interaction with the service layer. The HSS stores subscription data, service profile, location information, authentication information, and the like of IMS users. A Diameter Routing Agent (DRA) is configured to implement Diameter signaling addressing, Diameter signaling forwarding and routing management, and provide access of a single entrance for mutual access among a plurality of Diameter network elements.

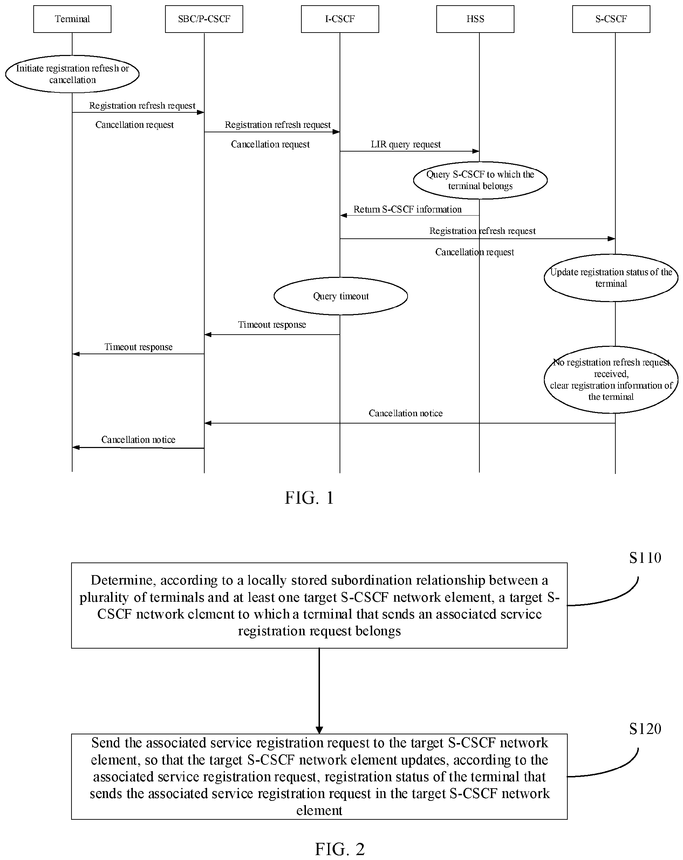

FIG. 1 shows a flowchart showing signaling interaction for associated service registration in an IMS according to the related art. When a terminal initiates a registration refresh or cancellation request, the SBC/P-CSCF sends the registration refresh or cancellation request to the I-CSCF which initiates a Location-Info-Request (LIR) query request to an HSS to obtain the S-CSCF to which the terminal belongs. Then, the I-CSCF forwards the registration refresh or cancellation request to the S-CSCF to which the terminal belongs, so that the S-CSCF updates registration status of the terminal according to the registration refresh or cancellation request.

The inventor of the present disclosure has found in research that in the IMS network, registration refresh requests initiated by the user terminals take a proportion of more than 85% among various associated service registration requests. When the I-CSCF network element cannot access the HSS due to failure or update of the HSS, the I-CSCF network element cannot determine the target S-CSCF network element to which the terminal that sends the associated service registration request belongs by query, so that the associated service registration requests such as cancellation or registration refresh initiated by the terminal cannot be sent to the target S-CSCF network element, or normal maintenance of the registration status of the terminal cannot be implemented. Especially, when the associated service registration request initiated by the terminal is a registration refresh request, as shown in FIG. 1, when query of the HSS by the I-CSCF network element times out, a timeout response is returned to the terminal via the SBC/P-CSCF network element. In contrast, during a registration refresh period, if no registration refresh request is received from the terminal, the S-CSCF network element will determine that the terminal is offline, so local registration information of the terminal in the S-CSCF network element is cleared, and a cancellation notice is sent to the terminal via the SBC/P-CSCF network element. Further, when the terminal is found offline, an initial registration process is started. However, once the registration refresh evolves to initial registration, but the HSS is still unavailable, a "registration signaling storm" will occur in the IMS network, which will not only further burden the HSS, but also bring a risk to the IMS network.

An embodiment of the present disclosure provides an associated service registration method applicable to a session border controller network element (which may be an SBC/P-CSCF network element). As shown in FIG.2, which is a flowchart of an associated service registration method according to an embodiment of the present disclosure, the associated service registration method may include the following operations S 110 and S 120.

At operation S1 10, determining, according to a locally stored subordination relationship between a plurality of terminals and at least one target S-CSCF network element, a target S-CSCF network element to which a terminal that sends an associated service registration request belongs.

At operation S 120, sending the associated service registration request to the target S-CSCF network element, so that the target S-CSCF network element updates, according to the associated service registration request, registration status of the terminal that sends the associated service registration request in the target S-CSCF network element.

In some embodiments, the associated service may be a registration refresh service initiated by a user terminal, or a cancellation service initiated by a user terminal, or any other service related to terminal registration, which is not limited in the embodiments of the present disclosure in any manner.

According to an embodiment of the present disclosure, the subordination relationship between the terminal and the S-CSCF network element to which the terminal belongs may be stored in the SBC/P-CSCF network element. The S-CSCF network element to which the terminal belongs refers to the S-CSCF network element in which the terminal is initially registered. In other words, when the initial registration of the terminal in an S-CSCF network element is successful, the S-CSCF network element for the initial registration is determined as the S-CSCF network element to which the terminal belongs. When the SBC/P-CSCF network element receives an associated service registration request, such as registration refresh, cancellation, or the like, initiated by the terminal, in operation S 110, according to the locally stored subordination relationship between the terminal and the S-CSCF network element, the target S-CSCF network element (i.e., the target S-CSCF network element in operations S 110 and S 120) to which the terminal that sends the associated service registration request belongs can be determined. Further, in operation S 120, the associated service registration request sent from the terminal may be directly forwarded to the target S-CSCF network element. Therefore, it is no longer desired to forward the associated service registration request sent from the terminal to the I-CSCF network element, and then determine the target S-CSCF network element by the I-CSCF querying the HSS.

According to the associated service registration method in the embodiment of the present disclosure, by controlling the associated service registration initiated by the terminal in operations S 110 and S 120, even if the I-CSCF cannot access the HSS due to failure or update of the HSS, the associated service registration can still be smoothly performed. In addition, when the associated service is registration refresh, the registration refresh request initiated by the terminal can be forwarded to the target S-CSCF in time, so that the target S-CSCF network element updates the registration status of the terminal that sends the associated service registration request in the target S-CSCF network element, thereby avoiding the "registration signaling storm". Furthermore, the inventor of the present disclosure has found in research that by controlling the associated service registration initiated by the terminal in operations S 110 and S 120, an amount of associated services processed by a network element device, such as the I-CSCF, can be reduced by 90% or more.

It should be further noted that the IMS network using the associated service registration method provided in the embodiments of the present disclosure is not limited in the embodiments of the present disclosure in any manner. For example, the IMS network may be any one of a Voice over Long-Term Evolution (VoLTE) network, a Voice over New Radio (VoNR) network, a fixed IMS network, or a converged communication network.

According to the associated service registration method in the embodiment of the present disclosure, the subordination relationship between a terminal and the S-CSCF network element to which the terminal belongs is stored in the SBC/P-CSCF network element, and when an associated service registration request initiated by the terminal is received, the associated service registration request can be directly forwarded to the S-CSCF network element to which the terminal belongs, so that the S-CSCF network element to which the terminal belongs can update the registration status of the terminal in time. Thus, when communication between the I-CSCF and the HSS is abnormal due to failure or update of the HSS, the actual status of the terminal can remain consistent with the registration status of the terminal in the IMS network. In addition, since the SBC/P-CSCF network element directly forwards the associated service registration request sent from the terminal to the S-CSCF network element, the "registration signaling storm" caused by the fact that the S-CSCF network element cannot receive a registration refresh request from the terminal can be avoided, while an amount of registration services processed by a network element device, such as the I-CSCF or the like, is reduced. Therefore, the requirements on the device in the IMS network are reduced, and stability of the IMS network is improved.

In some embodiments, the subordination relationship between terminals and S-CSCF network elements locally stored by the SBC/P-CSCF network element can be dynamically maintained. As described above, when the initial registration of the terminal in an S-CSCF network element is successful, the S-CSCF network element for the initial registration is determined as the S-CSCF network element to which the terminal belongs. Therefore, when the initial registration of the terminal is successful, the subordination relationship between the terminal of successful initial registration and the S-CSCF network element to which the terminal belongs is locally stored in the SBC/P-CSCF network element. When the terminal is cancelled from the IMS, the subordination relationship between the terminal and the S-CSCF network element to which the terminal originally belongs, which is locally stored in the SBC/P-CSCF network element, can be deleted, so as to simplify the subordination relationship information between terminals and S-CSCF network elements locally configured in the SBC/P-CSCF network element. As an optional implementation, in some embodiments, when the initial registration of the terminal is successful, the S-CSCF network element can send a successful response of initial registration to the SBC/P-CSCF network element, and send identifier information of the S-CSCF network element to the SBC/P-CSCF network element through the successful response of initial registration. As a result, the SBC/P-CSCF network element can determine the subordination relationship between the terminal and the S-CSCF network element to which the terminal belongs according to the successful response of initial registration.

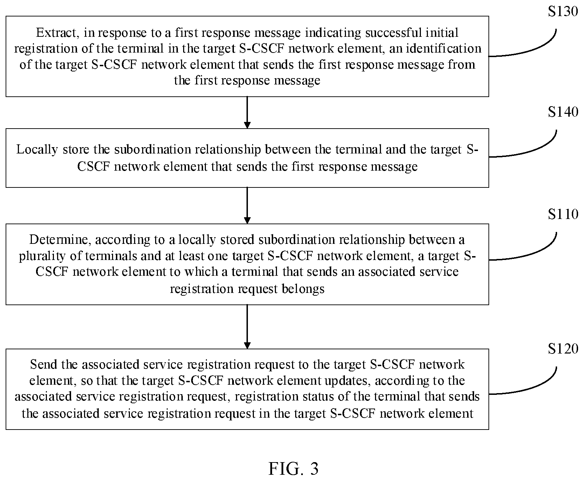

In some embodiments, as shown in FIG. 3, which is another flowchart of an associated service registration method according to an embodiment of the present disclosure, in addition to operations S110 and S 120, the method may further include operations S130 and S140.

At operation S130, extracting, in response to a first response message indicating successful initial registration of the terminal in the target S-CSCF network element, an identifier of the target S-CSCF network element that sends the first response message from the first response message.

At operation S140, locally storing the subordination relationship between the terminal and the target S-CSCF network element that sends the first response message.

It should be noted that the identifier of the S-CSCF network element in the embodiments of the present disclosure is not limited in any manners, and it all belongs to the protection scope of the present disclosure as long as the S-CSCF network element can be identified with the identifier. The identifier of the S-CSCF network element can be, for example, a host name of the S-CSCF network element, or IP address information of the S-CSCF network element.

In some embodiments, in addition to updating the registration status of the terminal that sends the associated service registration request in the S-CSCF network element to which the terminal belongs (i.e., the target S-CSCF network element), registration status of the terminal that sends the associated service registration request in other network elements of the IMS network is desired to be updated to ensure consistent registration status of the terminal in each network element in the IMS network. As an optional implementation, after updating the registration status of the terminal, the S-CSCF network element to which the terminal that sends the associated service registration request belongs may send a response message indicating successful update of the registration status to the SBC/P-CSCF network element, so that the SBC/P-CSCF network element updates, according to the response message indicating successful update of the registration status, local registration status of the terminal that sends the associated service registration request in the SBC/P-CSCF network element.

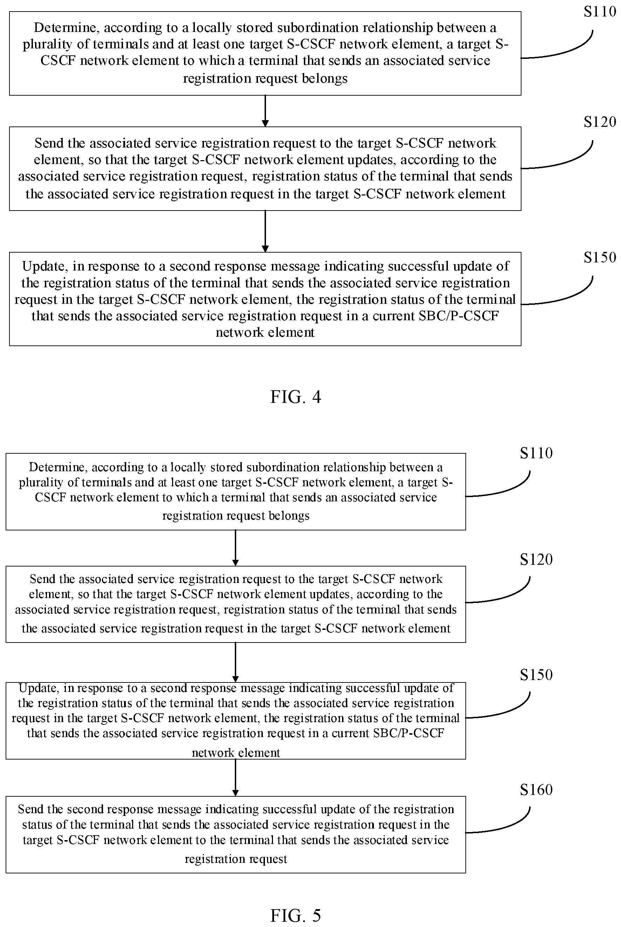

In some embodiments, as shown in FIG. 4, which is yet another flowchart of an associated service registration method according to an embodiment of the present disclosure, after operation S 120, the method may further include operation S150.

At operation S150, updating, in response to a second response message indicating successful update of the registration status of the terminal that sends the associated service registration request in the target S-CSCF network element, the registration status of the terminal that sends the associated service registration request in a current SBC/P-CSCF network element.

In some embodiments, the SBC/P-CSCF network element can further forward the second response message indicating successful update of the registration status sent from the target S-CSCF network element to the terminal that initiates the associated service registration.

In some embodiments, as shown in FIG. 5, which is still another flowchart of an associated service registration method according to an embodiment of the present disclosure, the method may further include operation S160.

At operation S 160, sending the second response message indicating successful update of the registration status of the terminal that sends the associated service registration request in the target S-CSCF network element to the terminal that sends the associated service registration request.

In some embodiments, the associated service registration request can include an initial registration request, a registration refresh request, or a cancellation request.

In some embodiments, as an optional implementation, the initial registration request, the registration refresh request, and the cancellation request initiated by the terminal can be controlled in differentiated manners. Upon receiving an initial registration request sent from the terminal, the SBC/P-CSCF network element forwards the initial registration request to the I-CSCF network element to execute an initial registration process. Upon receiving a registration refresh request or a cancellation request sent from the terminal, the SBC/P-CSCF network element controls the corresponding associated service according to operations S 110 and S 120 in the embodiment of the present disclosure.

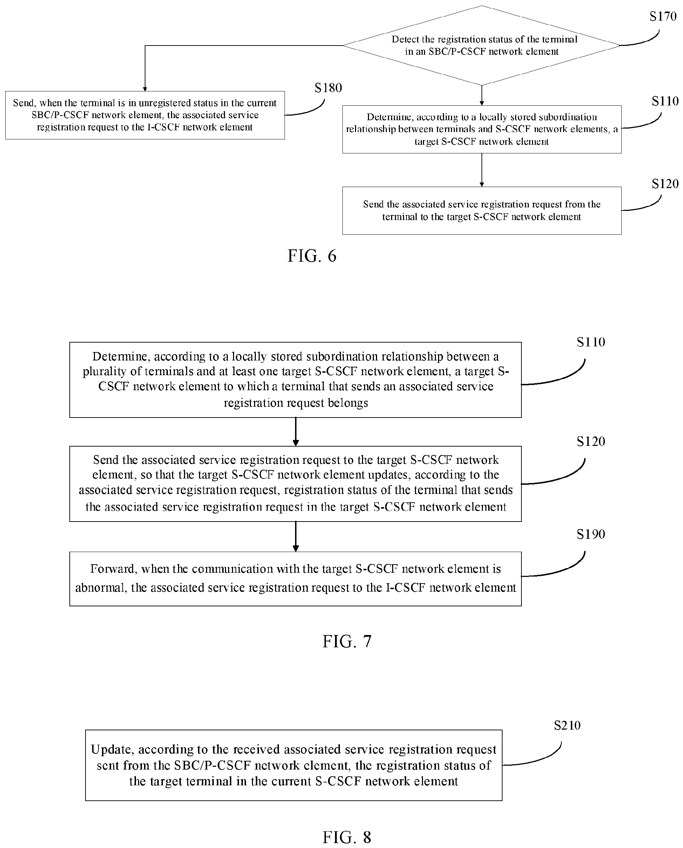

FIG. 6 shows still another flowchart of an associated service registration method according to an embodiment of the present disclosure. Before operation S 110, the method may further include operations S 170 and S 180.

At operation S 170, detecting the registration status of the terminal that sends the associated service registration request in a current SBC/P-CSCF network element.

At operation S 180, sending, when the terminal that sends the associated service registration request is in unregistered status in the current SBC/P-CSCF network element, the associated service registration request to the I-CSCF network element; and performing, when the terminal that sends the associated service registration request is in registered status in the current SBC/P-CSCF network element, operations S 110 and S 120.

According to an embodiment of the present disclosure, a plurality of message forwarding paths are provided between the SBC/P-CSCF network element and the S-CSCF network element of the IMS network. For example, the SBC/P-CSCF network element can directly send the received associated service registration request sent from the terminal to the S-CSCF network element, or can send the associated service registration request to the S-CSCF network element via the I-CSCF network element. In addition, when mutual access of network elements in the IMS network is desired, the access can be implemented via a DRA, or can be implemented directly without any DRA. For example, the SBC/P-CSCF network element can access the S-CSCF network element via a DRA, or can directly access the S-CSCF network element. For another example, the I-CSCF network element can access the HSS via a DRA, or can directly access the HSS. This is not limited in the embodiments of the present disclosure in any manner.

As an optional implementation, in some embodiments, before the SBC/P-CSCF network element forwards the associated service registration request sent from the terminal to the S-CSCF network element in operation S120, communication status between the SBC/P-CSCF network element and the S-CSCF network element may be detected first. When the communication is normal, operation S 120 is performed to forward the associated service registration request to the S-CSCF network element; and when the communication is abnormal, a new message forwarding path may be selected.

In some embodiments, as shown in FIG. 7, which is still another flowchart of an associated service registration method according to an embodiment of the present disclosure, the method may further include operation S190.

At operation S190, forwarding, when the communication with the target S-CSCF network element is abnormal, the associated service registration request to the I-CSCF network element.

An embodiment of the present disclosure further provides an associated service registration method applicable to an S-CSCF network element. As shown in FIG. 8, which is a flowchart of an associated service registration method according to an embodiment of the present disclosure, the method may include operation S210.

At operation S210, updating, according to the received associated service registration request sent from the SBC/P-CSCF network element, a registration status of the a terminal in the current S-CSCF network element.

According to an embodiment of the present disclosure, the associated service registration request is an associated service registration request initiated by the target terminal, which is sent from the SBC/P-CSCF network element according to any one of the associated service registration methods provided in the embodiments of the present disclosure.

According to an embodiment of the present disclosure, after receiving the associated service registration request sent from the target terminal, an SBC/P-CSCF network element in the IMS network forwards the associated service registration request to an S-CSCF network element, and after receiving the associated service registration request, the S-CSCF network element may perform operation S210 to update the registration status of the target terminal in the S-CSCF network element.

According to an embodiment of the present disclosure, the associated service can be a registration refresh service initiated by a user terminal, or a cancellation service initiated by a user terminal, or any other service related to terminal registration, which is not limited in the embodiments of the present disclosure in any manner. The target terminal can be any terminal that initiates the associated service registration request, which is not limited in the embodiments of the present disclosure in any manners.

The IMS network is not limited in the embodiments of the present disclosure in any manners. For example, the IMS network can be any one of VoLTE, VoNR, a fixed IMS network, or a converged communication network.

In some embodiments, the associated service registration request of the target terminal can be sent from the SBC/P-CSCF network element to the current S-CSCF network element via a DRA, or sent from the SBC/P-CSCF network element directly to the current S-CSCF network element, which is not limited in the embodiments of the present disclosure in any manners.

In some embodiments, even if the I-CSCF cannot access the HSS due to failure or update of the HSS, the current S-CSCF network element can still update the registration status of the target terminal according to the received associated service registration request.

According to the associated service registration method in the embodiment of the present disclosure, the S-CSCF network element can update, according to the associated service registration request sent from the SBC/P-CSCF network element, the registration status of the terminal in the current S-CSCF. Therefore, when communication between the I-CSCF and the HSS is abnormal due to failure or update of the HSS, the actual status of the terminal can still remain consistent with the registration status of the terminal in the IMS network. As a result, the "registration signaling storm" caused by failing to receive a registration refresh request from the terminal can be avoided, an amount of registration services processed by a network element device, such as the I-CSCF or the like, can be reduced, the requirements on the device in the IMS network are reduced, and stability of the IMS network is improved.

To ensure consistent registration status of the terminal in each network element in the IMS network, as an optional implementation, in some embodiments, after updating the registration status of the target terminal in the S-CSCF network element, the S-CSCF network element can send a response message indicating successful update of the registration status to the SBC/P-CSCF network element, so that the SBC/P-CSCF network element updates, according to the response message indicating successful update of the registration status, the registration status of the target terminal in the SBC/P-CSCF network element.

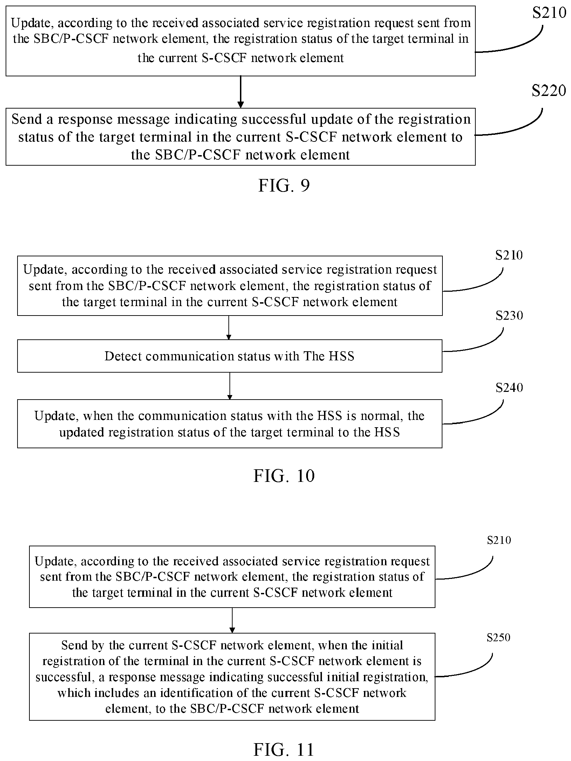

In some embodiments, as shown in FIG. 9, which is another flowchart of an associated service registration method according to an embodiment of the present disclosure, after operation S210, the method may further include operation S220.

At operation S220, sending a response message indicating successful update of the registration status of the target terminal in the current S-CSCF network element to the SBC/P-CSCF network element.

In some embodiments, when the communication status with the HSS is normal, the current S-CSCF network element may further update the updated registration status of the target terminal to the HSS.

In some embodiments, as shown in FIG. 10, which is yet another flowchart of an associated service registration method according to an embodiment of the present disclosure, after operation S210, the method may further include operations S230 and S240.

At operation S230, detecting communication status with the HSS.

At operation S240, updating, when the communication status with the HSS is normal, the updated registration status of the target terminal to the HSS.

In some embodiments, the S-CSCF network element may forward a registration information update request (or a response message indicating successful update of the registration status) to the HSS via a DRA, or may directly initiate a server-assignment-request (SAR) update request to the HSS to update the registration status of the target terminal to the HSS. This is not limited in the embodiments of the present disclosure in any manners.

In some embodiments, when the communication status with the HSS is abnormal, the current S-CSCF may not initiate a registration information update request to the HSS; or may initiate a registration information update request to the HSS, but not perform any additional processing when update of the registration information times out. This is not limited in the embodiments of the present disclosure in any manners.

In some embodiments, if the associated service registration request received by the current S-CSCF network element is a cancellation request, the HSS still stores the subordination relationship between the target terminal and the current S-CSCF network element after the HSS returns to normal. When the target terminal initiates the initial registration request again, the I-CSCF network element queries the subordination relationship between the target terminal and the current S-CSCF network element from the HSS in the initial registration process, and the current S-CSCF network element may be re-allocated to the target terminal. When the initial registration of the target terminal is completed, the registration status of the target terminal in the network elements including SBC/P-CSCF, I-CSCF, S-CSCF, HSS and the like of the IMS network remains consistent.

In some embodiments, if the associated service registration request received by the current S-CSCF network element is a registration refresh request, registration refresh is completed according to any one of the above associated service registration methods, and after the HSS returns to normal, the S-CSCF network element can update the updated registration status to the HSS.

As an optional implementation, in some embodiments, when the initial registration of the terminal is successful, the S-CSCF network element can send a successful response of initial registration to the SBC/P-CSCF network element, and send identifier information of the S-CSCF network element to the SBC/P-CSCF network element through the successful response of initial registration, so that the SBC/P-CSCF network element can determine the subordination relationship between the terminal and the S-CSCF network element according to the successful response of initial registration.

In some embodiments, as shown in FIG. 11, which is still another flowchart of an associated service registration method according to an embodiment of the present disclosure, the method may further include operation S250.

At operation S250, sending by the current S-CSCF network element, when the initial registration of the terminal in the current S-CSCF network element is successful, a response message indicating successful initial registration, which includes an identifier of the current S-CSCF network element, to the SBC/P-CSCF network element.

the identifier of the S-CSCF network element in the embodiments of the present disclosure is not limited in any manner, and it all belongs to the protection scope of the present disclosure as long as the S-CSCF network element can be identified with the identifier. The identifier of the S-CSCF network element may be, for example, a host name of the S-CSCF network element, or IP address information of the S-CSCF network element.

The following describes the associated service registration method provided in the embodiments of the present disclosure in detail with reference to specific examples.

### Example I

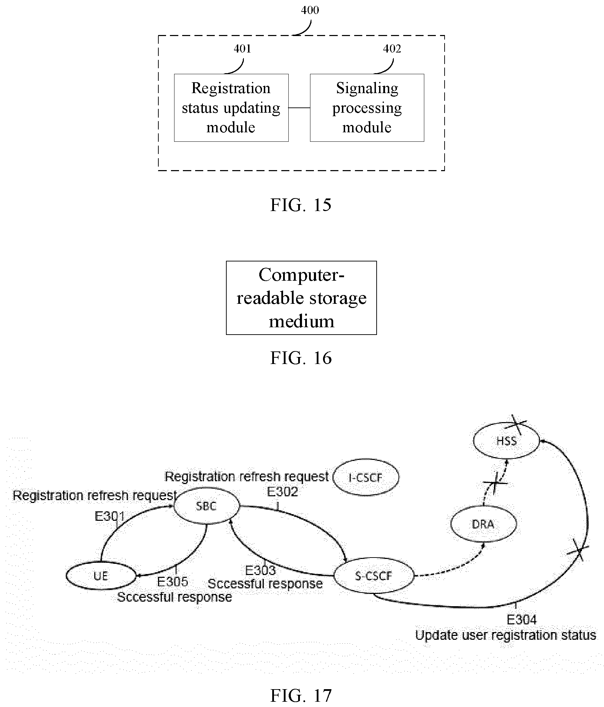

FIG. 17 is a schematic diagram showing signaling interaction for processing a registration refresh service initiated by a terminal according to an embodiment of the present disclosure. As shown in FIG. 17, the processing of the registration refresh service initiated by the terminal can include E301 to E305.

In E301, after the initial registration is successful, the terminal initiates a registration refresh request within a refresh period, and sends the registration refresh request to an SBC/P-CSCF network element.

In E302, the SBC/P-CSCF network element forwards the registration refresh request to an S-CSCF network element without passing through an I-CSCF network element.

In E303, after receiving the registration refresh request, the S-CSCF network element updates local registration status of the terminal in the S-CSCF network element and a relevant timer, and directly returns a successful response of registration refresh to the SBC/P-CSCF network element.

In E304, when determining that the registration information of the terminal is desired to be updated to the HSS, the S-CSCF network element forwards via a DRA, or directly initiates, a registration information update request to the HSS, and since the HSS is not available at this time, the update times out, and the S-CSCF network element does not perform additional processing.

In E305, after receiving the successful response of registration refresh, the SBC/P-CSCF network element updates local registration status of the terminal in the SBC/P-CSCF network element and a relevant timer, and forwards the successful response of registration refresh to the terminal.

After receiving the successful response of registration refresh, the terminal can initiate a registration refresh request again in a next registration refresh period, rather than send the initial registration request for many times within a short time, thereby avoiding the "registration signaling storm".

### Example II

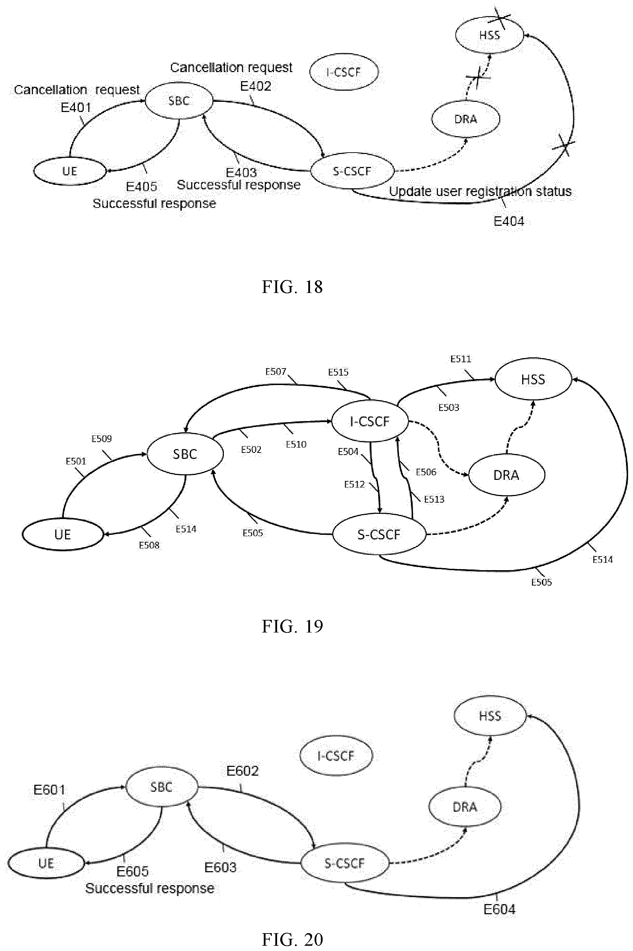

FIG. 18 is a schematic diagram showing signaling interaction for processing a cancellation service initiated by a terminal according to an embodiment of the present disclosure. As shown in FIG. 18, the processing of the cancellation service initiated by the terminal may includeE401 to E405.

In E401, after the initial registration is successful, the terminal initiates a cancellation request, and sends the cancellation request to the SBC/P-CSCF network element.

In E402, the SBC/P-CSCF network element forwards the cancellation request to an S-CSCF network element without passing through an I-CSCF network element.

In E403, after receiving the cancellation request, the S-CSCF network element updates local registration status of the terminal in the S-CSCF network element and a relevant timer, and directly returns a successful response of cancellation to the SBC/P-CSCF network element.

In E404, when determining that the registration information of the terminal is desired to be updated to the HSS, the S-CSCF network element forwards via a DRA, or directly initiates, a registration information update request to the HSS, and since the HSS is not available at this time, the update times out, and the S-CSCF network element does not perform additional processing.

In E405, after receiving the successful response of cancellation, the SBC/P-CSCF network element updates local registration status of the terminal in the SBC/P-CSCF network element and a relevant timer, and forwards the successful response of cancellation to the terminal.

After receiving the successful response of cancellation, the terminal will not send the cancellation request for many times within a short time, thereby avoiding the "registration signaling storm".

### Example III

FIG. 19 is a schematic diagram showing signaling interaction for registration information synchronization between network elements after HSS recovery according to an embodiment of the present disclosure. As shown in FIG. 19, the registration information synchronization between network elements after the HSS is restored may include E501 to E516.

In E501, a terminal initiates an initial registration request, and sends the initial registration request to an SBC/P-CSCF network element.

In E502, after checking, the SBC/P-CSCF network element finds that the terminal is locally unregistered in the SBC/P-CSCF network element, that is, no corresponding registration information is present, and thus forwards the initial registration request to an I-CSCF network element.

In E503, the I-CSCF network element sends a User-Authorization-Request (UAR) to query the HSS for information of an S-CSCF network element to which the terminal belongs. Since the HSS still keeps preceding registration information of the terminal, information of a last S-CSCF network element where the terminal is registered may be returned to the I-CSCF network element.

In E504, the I-CSCF network element forwards the initial registration request to the last S-CSCF network element where the terminal is registered.

In E505, after determining that the terminal is locally unregistered in the S-CSCF network element, that is, no corresponding registration information is present, the S-CSCF network element executes an initial registration process, and acquires authentication data from the HSS.

In E506, the S-CSCF network element returns a challenge response to the I-CSCF network element.

In E507, the I-CSCF network element forwards the challenge response to the SBC/P-CSCF network element.

In E508, the SBC/P-CSCF network element forwards the challenge response to the terminal.

In E509, the terminal extracts the authentication information from the challenge response, authenticates the network side, and then initiates a new initial registration request to the SBC/P-CSCF.

In E510, the SBC/P-CSCF network element forwards the initial registration request to the I-CSCF network element.

In E511, the I-CSCF network element obtains information of the S-CSCF network element to which the terminal belongs by querying the HSS.

In E512, the I-CSCF network element forwards the initial registration request to the S-CSCF to which the terminal belongs.

In E513, the S-CSCF network element performs an authentication operation according to the information in the initial registration request, and returns a successful response of initial registration to the I-CSCF network element, where the successful response of initial registration may carry a host name of the S-CSCF network element.

In E514, the S-CSCF network element sends a registration status update request to the HSS to update registration information of a user, where the registration status update request may carry the host name of the S-CSCF network element.

In E515, the I-CSCF forwards the successful response of initial registration to the SBC/P-CSCF network element.

In E516, the SBC/P-CSCF network element stores the host name of the S-CSCF in the successful response of initial registration, and forwards the successful response of initial registration to the terminal.

Therefore, the terminal completes the initial registration process, and maintains synchronous registration status in the SBC/P-CSCF network element, the S-CSCF network element and the HSS.

### Example IV

FIG. 20 is another schematic diagram showing signaling interaction for registration information synchronization between network elements after HSS recovery according to an embodiment of the present disclosure. As shown in FIG. 20, the registration information synchronization between network elements after the HSS is restored may includeE601 to E605.

In E601, after the initial registration is successful, the terminal initiates a registration refresh request to the SBC/P-CSCF network element in a registration refresh period.

In E602, the SBC/P-CSCF network element forwards the registration refresh request to an S-CSCF network element without passing through an I-CSCF network element.

In E603, after receiving the registration refresh request, the S-CSCF network element updates local registration status in the S-CSCF network element and a relevant timer, and directly returns a successful response of registration refresh to the SBC/P-CSCF network element.

In E604, when determining that the registration information of the terminal is desired to be updated to the HSS, the S-CSCF network element forwards via a DRA, or directly initiates, a registration information update request to the HSS, and at this time, the HSS becomes available from unavailable, the update is successful, and the HSS refreshes the registration information of the user.

In E605, after receiving the successful response of registration refresh, the SBC/P-CSCF network element updates local registration status of the terminal in the SBC/P-CSCF network element and a relevant timer, and forwards the successful response of registration refresh to the terminal.

After receiving the successful response of registration refresh, the terminal may send a registration refresh request again in a next registration refresh period, rather than send the initial registration request for many times within a short time, thereby avoiding the "registration signaling storm".

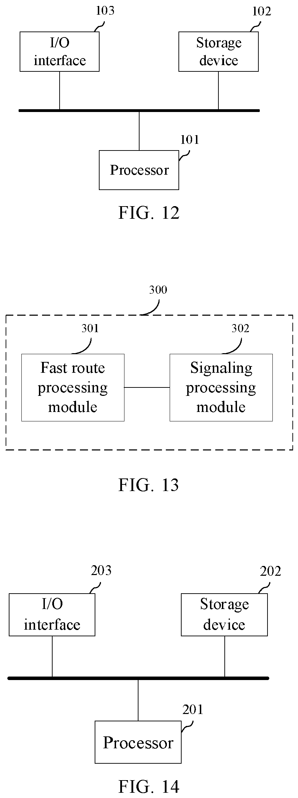

An embodiment of the present disclosure further provides a session border controller network element, which may be an SBC/P-CSCF network element. As shown in FIG. 12, which is a block diagram of a session border controller network element according to an embodiment of the present disclosure, a session border controller network element 100 may include: one or more processors 101; a storage device 102 having one or more programs stored thereon which may be executed by the one or more processors 101 to cause the one or more processors 101 to implement at least one operation performed by the SBC/P-CSCF network element in any of the associated service registration methods provided in the embodiments of the present disclosure; and one or more I/O interfaces 103 connected between the one or more processors 101 and the storage device 102, and configured to enable information interaction between the one or more processors 101 and the storage device 102.

The processor 101 is a device with a data processing capability, including but not limited to a Central Processing Unit (CPU), or the like; the storage device 102 is a device with a data storage capability including but not limited to, a Random Access Memory (RAM, more specifically SDRAM, DDR, etc.), a Read Only Memory (ROM), an Electrically Erasable Programmable Read Only Memory (EEPROM) or a Flash Memory (FLASH); and the I/O interface (read/write interface) 103 is connected between the processor 101 and the storage device 102 to implement information interaction between the processor 101 and the storage device 102, including, but not limited to, a data bus and the like.

In some embodiments, the processor 101, the storage device 102, and the I/O interface 103 can be interconnected via a bus, and further connected to other components of the session border controller network element 100.

The associated service registration methods provided in the embodiments of the present disclosure have been described in detail above, and thus are not repeated herein.

An embodiment of the present disclosure further provides a session border controller network element, which may be an SBC/P-CSCF network element. As shown in FIG. 13, which is another block diagram of a session border controller network element according to an embodiment of the present disclosure, a session border controller network element 300 may include a fast route processing module 301 and a signaling processing module 302.

The fast route processing module 301 may be configured to determine, according to a locally stored subordination relationship between terminals and target S-CSCF network elements, a target S-CSCF network element to which a terminal that sends an associated service registration request belongs.

The signaling processing module 302 may be configured to send the associated service registration request to the target S-CSCF network element. The associated service registration request is configured to instruct the target S-CSCF network element to update registration status of the terminal in the target S-CSCF network element according to the associated service registration request.

In some embodiments, the fast route processing module 301 may be further configured to extract, in response to a response message indicating successful initial registration of the terminal in the target S-CSCF network element, an identifier of the target S-CSCF network element from the response message.

In some embodiments, the fast route processing module 301 may be further configured to detect communication status between the SBC/P-CSCF network element and the target S-CSCF network element.

In some embodiments, the signaling processing module 302 may be further configured to forward the associated service registration request to an I-CSCF network element according to an instruction of the fast route processing module 301.

In some embodiments, the signaling processing module 302 may be further configured to send an initial registration request of the terminal to the I-CSCF network element.

In some embodiments, the signaling processing module 302 may be further configured to, according to an instruction of the fast route processing module 301, send a response message indicating successful update of the registration status of the terminal in the target S-CSCF network element to the terminal.

An embodiment of the present disclosure further provides an S-CSCF network element. As shown in FIG. 14, which is a block diagram of an S-CSCF network element according to an embodiment of the present disclosure, an S-CSCF network element 200 may include: one or more processors 201; a storage device 202 having one or more programs stored thereon which when executed by the one or more processors 201, cause the one or more processors 201 to implement at least one operation performed by the S-CSCF network element in any of the associated service registration methods provided in the embodiments of the present disclosure; and one or more I/O interfaces 203 connected between the one or more processors 201 and the storage device 202, and configured to enable information interaction between the one or more processors 201 and the storage device 202.

The processor 201 is a device with a data processing capability, including but not limited to a Central Processing Unit (CPU), or the like; the storage device 202 is a device with a data storage capability including but not limited to, a Random Access Memory (RAM, more specifically SDRAM, DDR, etc.), a Read Only Memory (ROM), an Electrically Erasable Programmable Read Only Memory (EEPROM) or a Flash Memory (FLASH); and the I/O interface (read/write interface) 203 is connected between the processor 201 and the storage device 202to implement information interaction between the processor 201 and the storage device 202, including, but not limited to, a data bus and the like.

In some embodiments, the processor 201, the storage device 202, and the I/O interface 203 are interconnected via a bus, and further connected to other components of the S-CSCF network element 200.

The associated service registration methods provided in the embodiments of the present disclosure have been described in detail above, and thus are not repeated here.

An embodiment of the present disclosure further provides an S-CSCF network element. As shown in FIG. 15, which is another block diagram of an S-CSCF network element according to an embodiment of the present disclosure, an S-CSCF network element 400 may include a registration status updating module 401 and a signaling processing module 402.

The signaling processing module 402 may be configured to receive an associated service registration request sent from a session border controller network element.

The registration status updating module 401 may be configured to update, according to the associated service registration request, registration status of a terminal in the S-CSCF network element 400. In some embodiments, the associated service registration request requests the session border controller network element to determine the S-CSCF network element 400 according to a locally stored subordination relationship between the terminal that sends the associated service registration request and the S-CSCF network element 400, and send the associated service registration request to the S-CSCF network element 400. In some embodiments, the associated service registration request is an associated service registration request initiated by the terminal, which is sent from the SBC/P-CSCF network element according to any one of the associated service registration methods provided in the embodiments of the present disclosure.

An embodiment of the present disclosure further provides a computer-readable storage medium. FIG. 16 shows a block diagram of a computer-readable storage medium according to an embodiment of the present disclosure. The computer-readable storage medium has a computer program stored thereon which, when executed by a processor, causes any one of the associated service registration methods described in the embodiments of the present disclosure to be implemented.

The associated service registration methods provided in the embodiments of the present disclosure have been described in detail above, and thus are not repeated here.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable storage medium which may include a computer storage medium (or non-transitory medium) or a communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. A computer storage medium includes, but is not limited to, RAM, ROM, EEPROM, flash memory or other memory technology, CD-ROM, digital versatile disc (DVD) or other optical disc storage, magnetic cartridge, magnetic tape, magnetic disk storage or other magnetic storage devices, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed example embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. An associated service registration method, applicable to a session border controller network element, comprising:
determining, according to a locally stored subordination relationship between terminals and target Serving-Call Session Control Function, S-CSCF, network elements, a target S-CSCF network element to which a terminal that sends an associated service registration request belongs; and
sending the associated service registration request to the target S-CSCF network element, wherein the associated service registration request is configured to instruct the target S-CSCF network element to update registration status of the terminal in the target S-CSCF network element according to the associated service registration request.

2. The method according to claim 1, which, before determining, according to the locally stored subordination relationship between terminals and target S-CSCF network elements, the target S-CSCF network element to which the terminal that sends an associated service registration request belongs, further comprises:
extracting, in response to a first response message, an identifier of the target S-CSCF network element that sends the first response message from the first response message, wherein the first response message represents successful initial registration of the terminal in the target S-CSCF network element; and
subordination relationship between terminals and target S-CSCF network elements are stored locally.

3. The method according to any one of claims 1 to 2, which, before determining, according to the locally stored subordination relationship between terminals and target S-CSCF network elements, the target S-CSCF network element to which the terminal that sends an associated service registration request belongs, further comprises:
determining registration status of the terminal in the session border controller network element;
sending, in response to determining that the registration status of the terminal in the session border controller network element is unregistered, the associated service registration request to an Interrogating-Call Session Control Function, I-CSCF, network element; and
acquiring, in response to determining that the registration status of the terminal in the session border controller network element is registered, the locally stored subordination relationship between terminals and target S-CSCF network elements.

4. The method according to claim 3, which, after sending the associated service registration request to the target S-CSCF network element, further comprises:
updating, in response to a second response message, the registration status of the terminal in the session border controller network element; wherein the second response message represents successful update of the registration status of the terminal in the target S-CSCF network element.

5. The method according to claim 4, further comprising: sending the second response message to the terminal.

6. The method according to claim 1, further comprising:
forwarding, in response to determining abnormal communication with the target S-CSCF network element, the associated service registration request to an I-CSCF network element.

7. An associated service registration method, applicable to a Serving-Call Session Control Function, S-CSCF, network element, comprising:
receiving an associated service registration request sent from a session border controller network element, wherein the associated service registration request requests the session border controller network element to determine the S-CSCF network element according to a locally stored subordination relationship between a terminal that sends the associated service registration request and the S-CSCF network element, and send the associated service registration request to the S-CSCF network element; and
updating, according to the associated service registration request, registration status of the terminal in the S-CSCF network element.

8. The method according to claim 7, which, after updating, according to the associated service registration request, registration status of the terminal in the S-CSCF network element, further comprises:
sending a second response message to the session border controller network element, wherein the second response message represents successful update of the registration status of the terminal in the S-CSCF network element.

9. The method according to claim 7 or 8, which, after updating, according to the associated service registration request, registration status of the terminal in the S-CSCF network element, further comprises:
determining communication status with Home Subscriber Server, HSS; and
sending, in response to normal communication status with the HSS, the updated registration status of the terminal in the S-CSCF network element to the HSS.

10. The method according to claim 7 or 8, which, before receiving the associated service registration request sent from the session border controller network element, further comprises:
sending, in response to successful initial registration of the terminal in the S-CSCF network element, a first response message to the session border controller network element, wherein the first response message represents successful initial registration of the terminal in the S-CSCF network element; and the first response messages comprises an identifier of the S-CSCF network element.

11. A session border controller network element, comprising:
at least one processor;
a storage device having at least one program stored thereon which, when executed by the at least one processor, causes the at least one processor to implement the associated service registration method according to any one of claims 1 to 6; and
at least one I/O interface connected between the at least one processor and the storage device, and configured to enable information interaction between the at least one processor and the storage device.

12. A Serving-Call Session Control Function, S-CSCF, network element, comprising:
at least one processor;
a storage device having at least one program stored thereon which, when executed by the one or more processors, causes the at least one processor to implement the associated service registration method according to any one of claims 7 to 10; and
at least one I/O interface connected between the at least one processor and the storage device, and configured to enable information interaction between the at least one processor and the storage device.

13. A computer-readable storage medium having a computer program stored thereon which, when executed by a processor, causes the associated service registration method according to any one of claims 1 to 10 to be implemented.
